# FASCICULE DE BREVET EUROPEEN

(11) **EP 0 783 192 B1**
(45) Date de publication et mention de la délivrance du brevet: **20.11.2002**
(21) Numéro de dépôt: 96402922.7
(22) Date de dépôt: 30.12.1996
(51) Int. Cl.: H01S 3/03

(54) **Dispositif laser à vapeur métallique**
Metalldampflaservorrichtung
Metal vapour laser device

(30) Priorité: 03.01.1996 FR 9600025
(43) Date de publication de la demande: 09.07.1997
(73) Titulaire: COMMISSARIAT A L'ENERGIE ATOMIQUE, 75015 Paris (FR); COMPAGNIE GENERALE DES MATIERES NUCLEAIRES, 78140 Velizy Villacoublay (FR)
(72) Inventeur: Le Guyadec, Eric, 26130 St Paul Trois Châteaux (FR); Bertrand, Guy, 26790 Suze La Rousse (FR)
(74) Mandataire: Poulin, Gérard

(56) Documents cités:
- EP-A- 0 402 842
- PATENT ABSTRACTS OF JAPAN vol. 013, no. 551 (E-857), 8 Décembre 1989 & JP 01 230284 A (TOSHIBA CORP), 13 Septembre 1989,
- IEEE JOURNAL OF QUANTUM ELECTRONICS, OCT. 1994, USA, vol. 30, no. 10, ISSN 0018-9197, pages 2385-2390, XP002014684 JONES D R ET AL: "A high-efficiency 200 W average power copper HyBrID laser"

## Description

### Domaine technique

L'invention concerne le domaine des dispositifs lasers à vapeur métallique, constitués d'un ensemble de tubes contenant le métal avec lequel on veut effectuer l'effet laser. Aux deux extrémités d'un tube interne sont placées des électrodes entre lesquelles on établit une décharge électrique impulsionnelle à l'aide d'une alimentation électrique adéquate. Cette décharge permet de chauffer le milieu situé entre les électrodes, un gaz réactif injecté formant alors un composé volatil avec le métal à vaporiser. La vapeur métallique atomique qui en résulte est également excitée par la décharge et subit une inversion de population, qui est à l'origine de l'effet laser.

### Etat de la technique

On connaît divers exemples de dispositifs lasers à vapeur métallique, par exemple des lasers à halogénure métallique.

Un tel dispositif laser est décrit dans le document GB-2 219 128. Ce dispositif comporte une enveloppe contenant deux électrodes et des segments métalliques cylindriques, par exemple en cuivre ou en or. En cours d'opération, un gaz halogène (par exemple du brome mélangé à un gaz tampon d'hélium) circule à travers l'enveloppe, et un halogénure métallique (par exemple CuBr ou Cu₃Br₃) est produit. Lorsque la décharge est réalisée entre les électrodes, l'halogénure métallique est vaporisé et se dissocie pour donner une vapeur de cuivre, qui est ensuite excitée pour produire une inversion de population.

Un autre dispositif est décrit dans le document US-5 339 327. Cet autre dispositif comporte un tube laser fermé par deux hublots à ses extrémités, et à l'intérieur duquel deux électrodes sont disposées. Une ou plusieurs chambres ou réacteurs, disposées à l'extérieur du tube, contiennent un métal, par exemple du cuivre sous forme granulaire. Du néon est introduit dans cette chambre, ainsi qu'un gaz halogène. Une bobine entoure la chambre et permet de réaliser un chauffage du métal qu'elle contient. Lors du passage du gaz, un halogénure métallique est formé et vaporisé du fait du chauffage. L'ensemble est ensuite introduit dans le tube laser où la dissociation de l'halogénure métallique et l'excitation des produits résultants entraînent une inversion de population.

Un troisième dispositif est décrit dans l'article de D.R. JONES et al. intitulé "A high-efficiency 200 W average power copper HgBrID laser" paru dans IEEE Journal of Quantum Electronics, vol. 30, n°10, p. 2385-2390, Octobre 1994.

Ce dispositif comporte un tube en silice à l'intérieur duquel un tube en alumine est disposé. De part et d'autre de ce tube, une anode et une cathode en cuivre, toutes deux de forme cylindrique, permettent de réaliser une décharge. Un mélange Ne et HBr est introduit, l'arrivée de gaz étant située du côté de l'anode opposée au côté tourné vers le tube d'alumine. De même, la sortie de gaz se trouve du côté de la cathode opposé au côté tourné vers le tube d'alumine.

Dans les dispositifs connus, le mélange de gaz est réalisé en amont du laser, le gaz actif étant en général introduit entre l'anode et le hublot le plus proche. Ce qu'il reste du gaz, après décharge et effet laser, est extrait de l'autre côté, entre la cathode et l'autre hublot. Par conséquent, avant d'arriver dans le tube interne, le gaz actif traverse une électrode, qui présente forcément des zones à température élevée, où il peut réagir ou se décomposer. Ceci a pour conséquence une consommation importante de gaz réactif (le troisième document cité ci-dessus donne une consommation de l'ordre de 3 à 4 normolitres/heure) ainsi qu'une diminution de la durée de vie des composants et, en particulier des électrodes, exposés au gaz réactif. La composition de la phase vapeur s'en trouve modifiée, elle peut même être polluée par des produits de corrosion.

En outre, le gaz actif, réagissant avec le métal, voit sa composition évoluer au cours de son trajet dans le tube interne. En conséquence, la concentration en halogénure métallique peut présenter un fort gradient longitudinal à l'intérieur du tube.

La demande de brevet EP-0 402 842 divulgue un dispositif de vaporisation de substance pour générer une vapeur destinée à être utilisée comme milieu ionisant ou milieu d'excitation.

### Exposé de l'invention

L'invention concerne un dispositif laser à vapeur métallique comportant :
- une enveloppe étanche,
- des électrodes disposées à l'intérieur de cette enveloppe,
- un métal ou un alliage métallique réactant disposé entre les électrodes,
- un conduit allongé pour introduire un gaz réactif entre les deux électrodes, ce conduit allongé étant muni d'un ou de plusieurs trous, ou bien étant poreux en un ou plusieurs points.

Ces trous, ou ces points, se situent à l'endroit, ou aux endroits, où le gaz doit être injecté. Le métal ou l'alliage métallique réactant peut alors être placé devant le (ou les) trou(s), ou devant le (ou les) point(s) poreux.

Dans le dispositif selon l'invention, le gaz réactif est acheminé au-delà de l'anode ou de la cathode, suivant le sens de circulation retenu. Le gaz actif, avant d'arriver dans le tube interne, n'est donc plus en contact avec l'une ou l'autre des électrodes : des réactions, en particulier des réactions de décomposition, ne sont donc plus susceptibles de se produire. Il en résulte une moindre consommation en gaz réactif (des débits employés en gaz actif de l'ordre de 1 normolitre/heure, ont pu être constatés). D'autre part la durée de vie des autres composants, moins exposés au gaz réactif, s'en trouve accrue. Pratiquement, la composition de la phase vapeur se trouve modifiée, elle est moins polluée par les produits de corrosion.

Un gaz inerte peut être introduit dans l'enveloppe, du côté d'au moins une des électrodes opposé au côté de l'électrode tourné vers le métal ou l'alliage métallique.

Par ailleurs, le métal ou l'alliage métallique réactant peut être disposé dans un tube interne, lui-même disposé entre les deux électrodes.

En outre, des moyens peuvent être prévus pour extraire le gaz actif, de l'intérieur du tube, entre les deux électrodes. Dans ce cas, le contact avec la deuxième électrode est également évité : des réactions préjudiciables à la durée de vie de cette deuxième électrode sont ainsi évitées. Des moyens d'extraction du gaz peuvent comporter un conduit allongé muni d'un ou de plusieurs trous, ou poreux à l'endroit ou aux endroits où le gaz doit être extrait.

Selon un second mode de réalisation, l'invention a également pour objet un dispositif laser à vapeur métallique comportant :
- une enveloppe étanche,
- des électrodes disposées à l'intérieur de cette enveloppe,
- un métal ou un alliage métallique réactant disposé entre les électrodes,
- un tube interne à l'intérieur duquel est disposé le métal ou l'alliage métallique réactant, disposé entre les électrodes, le tube interne étant muni de trous. Par les trous du tube interne, le gaz réactif peut être introduit à la fois dans ce tube et entre les deux électrodes.

Ainsi, un tube interne peut être lui-même muni de trous par lesquels le gaz réactif peut être introduit. Dans ce cas, la présence d'un conduit allongé pour introduire ou pour extraire le gaz actif est évitée, ce qui simplifie la construction du dispositif, notamment au niveau des électrodes.

Par ailleurs, ce dispositif présente les mêmes avantages que le dispositif selon le premier mode de réalisation (pas de contact gaz-électrodes, donc réactions de décomposition évitées ; moindre consommation en gaz des réactifs ; durée de vie accrue des composants ; moindre pollution de la phase vapeur).

Dans tous les cas, les électrodes peuvent être protégées par des manchons ajustés, en matériau inerte.

### Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
- la figure 1 est un exemple de réalisation d'un dispositif selon l'invention,
- la figure 2 est un autre exemple de réalisation d'un dispositif selon l'invention,
- la figure 3 représente un dispositif avec extraction de gaz actif entre les électrodes,
- la figure 4, est une variante d'un dispositif selon l'invention.

### Description détaillée de modes de réalisation de l'invention

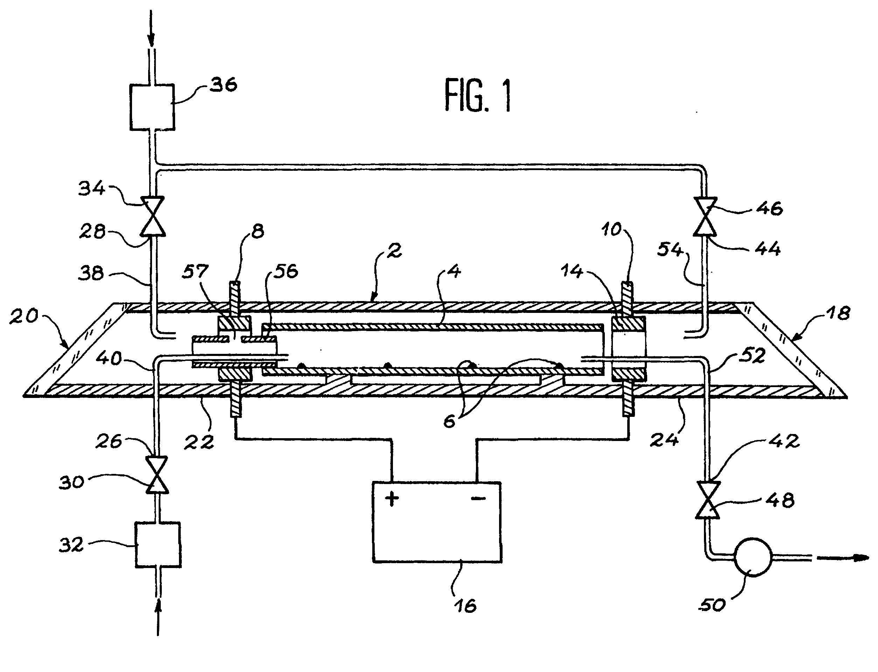

Dans l'exemple de réalisation donné sur la figure 1, le dispositif laser est mécaniquement constitué d'un tube externe 2 en silice et d'un tube interne 4, en silice ou en alumine, contenant un métal ou un alliage métallique 6 réactant. Des brides porte-électrodes 8, 10 supportent des électrodes 12, 14 qui permettent de créer une décharge électrique quand elles sont reliées à une alimentation électrique impulsionnelle 16. Des hublots transparents 18, 20, en silice ou en saphir, sont placés aux deux extrémités pour pouvoir extraire l'énergie optique. Ils sont supportés par des brides 22, 24 se montant sur les brides 8, 10.

La bride 22 contient deux connecteurs d'entrée de gaz 26, 28. Sur l'entrée 26 on raccorde le circuit de gaz réactif qui est un mélange d'un composé halogéné, comme par exemple HBr, et d'un gaz rare comme par exemple le néon. Ce circuit est composé d'une vanne de détente 30 et d'un régulateur de débit 32.

Sur l'autre entrée 28 on branche un circuit pour balayer l'électrode 12 avec un gaz inerte, comme le néon ou l'argon. Ce circuit est constitué d'une vanne de détente 34 et d'un régulateur de débit 36.

Le conduit de gaz 38 relié au connecteur 28 débouche dans le laser, entre le hublot 20 et l'électrode 12.

Une conduite de gaz réactif 40, reliée au connecteur 26 débouche dans le tube interne 4, entre l'électrode 12 et l'électrode 14.

La bride 24 dispose aussi de deux connecteurs 42, 44. Par le connecteur 44 arrive le gaz inerte de balayage via le régulateur de débit 36 et une vanne de détente 46.

Par le connecteur 42, on extrait les gaz introduits via une vanne de réglage de pression 48 et une pompe munie de filtres 50.

Le conduit d'extraction de gaz 52 relié au connecteur 42 débouche dans le tube interne 4 entre l'électrode 14 et l'électrode 12. Le conduit de gaz 54 relié au connecteur 44 a son orifice situé entre l'électrode 14 et le hublot 18.

Les dimensions et les conditions de fonctionnement de ce dispositif sont les suivantes :
- longueur du tube laser interne 4 : environ 2 m,
- diamètre du tube laser interne 4 : environ 5 cm,
- température du tube laser interne : environ 600°C,
- pression totale des gaz : environ 30 mbar,
- pression partielle du métal : environ 0,1 mbar,
- impulsion de tension : environ 20 KV,
- durée de l'impulsion de tension : environ 100 ns,
- fréquence de répétition des impulsions : environ 20 kHz.

Le gaz réactif employé est électronégatif, de manière à pouvoir autoriser le fonctionnement à haute fréquence de répétition (20 kHz) et être capable de réagir avec le métal ou un alliage (cuivre, or, césium ou argent,...) à relativement basse température (600°C), pour former un composé métallique qui sera ensuite dissocié, thermiquement ou par la décharge au centre du tube. Pour ces raisons, ce gaz réactif est halogéné, et est préférentiellement de type HBr ou HCl. De manière à ce qu'il ne réagisse qu'avec le métal ou l'alliage (cuivre, or, césium, argent...) présent dans le tube interne 4, il est acheminé au-delà des électrodes 12, 14 sous forme de mélange avec un gaz rare (Ne, He, Ar...) au moyen de tuyauteries comme la conduite 40.

Les zones traversées par la conduite 40, à proximité de l'électrode 12, peuvent être portées à haute température (500-1000°C typiquement). D'autre part, il est préférable de ne pas perturber le fonctionnement électrique du laser. Par conséquent, les matériaux utilisés pour la conduite 40 sont de préférence isolants électriquement, et capables de résister aux températures de fonctionnement. De plus ils passent au plus près des parois internes, de manière à ne pas obturer le faisceau laser. Des matériaux comme la silice fondue ou l'alumine conviennent bien. On s'assure en outre que le point "d'accrochage" de la décharge sur l'électrode est suffisamment éloigné de la conduite.

Un manchon 56 en un matériau inerte (par exemple silice, alumine,...) peut être prévu sur l'une ou l'autre des électrodes, ou sur les deux, afin de la (les) protéger contre l'énergie de la décharge. Dans ce manchon, une ouverture 57 permet de localiser le point d'accrochage de la décharge sur l'électrode 12 et de maintenir la conduite 40 suffisamment éloignée du point d'accrochage.

Selon un autre mode de réalisation, les polarités des deux électrodes peuvent être inversées, le gaz réactif étant alors injecté au-delà de la cathode.

Dans l'exemple donné sur la figure 1, la conduite 40 s'arrête à l'entrée du tube intérieur 4. Elle peut également être prolongée plus profondément à l'intérieur de ce tube, par exemple juste au-dessus d'un dépôt de métal ou d'alliage métallique 6.

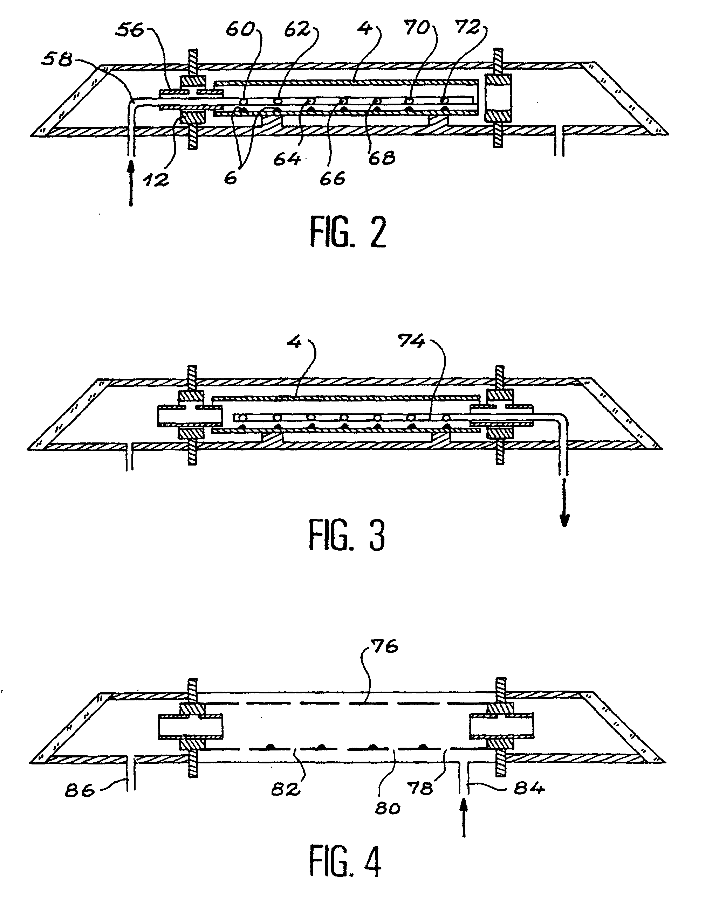

Un autre mode de réalisation conforme à l'invention est illustré sur la figure 2. Sur cette figure, des références numériques identiques à celles de la figure 1 y désignent des éléments identiques ou équivalents. La conduite 58 pour introduire les gaz réactifs s'étend tout le long du tube intérieur 4. Elle présente plusieurs trous 60,... 72 par lesquels le gaz réactif est émis à l'intérieur de la cavité 4. De préférence, des dépôts métalliques ou des dépôts d'alliage métallique 6 sont situés en face de ces trous : la réaction se fait avec le gaz, dès sa sortie de la conduite 58, ce qui présente l'avantage d'optimiser l'utilisation du gaz. Les trous 60, ... 72 peuvent être remplacés par des zones poreuses situées le long de la conduite 58, à travers lesquelles le gaz réactif diffuse vers l'intérieur du tube 4. Du fait de la disposition des trous ou des zones poreuses le long du tube 58, le gaz réactif est réparti de manière homogène à l'intérieur du tube et la réaction avec le composé métallique 6 est plus efficace.

Un autre mode de réalisation, va être décrit en liaison avec la figure 3, sur laquelle la conduite d'introduction du gaz réactif n'est pas représentée. La conduite 74 est une conduite d'extraction des gaz depuis l'intérieur du tube 4. Cette conduite peut être munie d'un ou de plusieurs trous, comme dans le cas de la conduite d'introduction de gaz de la figure 2. De même, ces trous peuvent être remplacés par une ou plusieurs zones poreuses à travers lesquelles le gaz actif diffuse, depuis l'intérieur de la cavité 4 vers l'intérieur de la conduite 74. Une extraction est ainsi réalisée, depuis l'intérieur du tube 4, ce qui permet d'éviter tout contact entre le gaz actif et l'électrode située du côté de la sortie de ces gaz. Lorsque la conduite 74 présente une pluralité de trous ou de zones poreuses, tout le long du tube 4, une extraction homogène sur toute la longueur du tube est obtenue.

Un autre mode de réalisation va maintenant être décrit, en liaison avec la figure 4. Sur cette figure, le tube interne 76 est percé d'une pluralité de trous 78, 80, 82,... qui permettent l'introduction du gaz réactif dans le tube interne, via la conduite d'entrée 84, et l'extraction des gaz par la conduite de sortie 86. La conduite de sortie 86 peut également être située avant l'électrode de sortie, c'est-à-dire entre les deux électrodes, auquel cas le gaz actif n'est pas en contact avec cette électrode lors de son extraction. Des dépôts métalliques ou des dépôts d'alliage métalliques sont situés entre les trous 78, 80, 82, ... La réaction se fait avec le gaz, dès sont passage à travers les trous. Là encore, l'utilisation du gaz est optimisée, le gaz réactif est réparti de manière homogène à l'intérieur du tube et la réaction avec le composé métallique est plus efficace.

## Revendications

1. Dispositif laser à vapeur métallique comportant :
- une enveloppe étanche (2),
- des électrodes (12, 14) disposées à l'intérieur de cette enveloppe,
- un métal ou un alliage métallique réactant (6) disposé entre les électrodes,
- un conduit allongé (40, 58) pour introduire un gaz réactif entre les deux électrodes, ce conduit allongé (40, 58) étant muni d'un ou de plusieurs trous (60, 62,..., 72), ou bien étant poreux en un ou plusieurs points.

2. Dispositif laser à vapeur métallique selon la revendication 1, des moyens (38, 54) étant prévus pour introduire un gaz inerte dans l'enveloppe, du côté d'au moins une des électrodes, opposé au côté de l'électrode tourné vers le métal ou l'alliage métallique.

3. Dispositif laser selon l'une des revendications 1 ou 2, comportant en outre un tube interne (4) à l'intérieur duquel est disposé le métal ou l'alliage métallique réactant (6) disposé entre les électrodes.

4. Dispositif selon l'une des revendications 1 à 3, le métal ou l'alliage métallique réactant (6) étant placé devant le (ou les) trou(s) (60, 62,..., 72) ou devant le (ou les) point(s) poreux.

5. Dispositif selon l'une des revendications 1 à 4, des moyens (52) étant en outre prévus pour extraire du gaz de l'intérieur du tube, entre les deux électrodes.

6. Dispositif selon la revendication 5, les moyens d'extraction du gaz comportant un conduit (74) allongé muni de trous ou poreux aux endroits où le gaz doit être extrait.

7. Dispositif laser à vapeur métallique comportant :
- une enveloppe étanche (2),
- des électrodes (12, 14) disposées à l'intérieur de cette enveloppe,
- un métal ou un alliage métallique réactant (6) disposé entre les électrodes,
- un tube interne (76) à l'intérieur duquel est disposé le métal ou l'alliage métallique réactant (6), disposé entre les électrodes, le tube interne étant muni de trous (78, 80, 82) qui permettent l'introduction d'un gaz réactif dans le tube interne.

8. Dispositif selon l'une des revendications précédentes, les électrodes étant protégées par des manchons (56) ajustés en matériaux inertes.

## Patentansprüche

1. Metalldampflaservorrichtung, umfassend:
- ein dichtes Gehäuse (2),
- Elekroden (12, 14), angeordnet im innern dieses Gehäuses,
- ein Reaktionsmetall oder eine Reaktionsmetalllegierung (6), angeordnet zwischen den Elektroden,
- eine langgestreckte bzw. dünne Leitung (40, 58) zum Einspeisen eines reaktiven Gases zwischen den beiden Elektroden, wobei diese längliche bzw. dünne Leitung (40, 58) mit einem Loch oder Löchern (60, 62, ..., 72) versehen ist oder an einer oder mehreren Stellen porös ist.

2. Metalldampflaservorrichtung nach Anspruch 1, wobei Einrichtungen (38, 54) vorgesehen sind, um ein inertes Gas in das Gehäuse auf derjenigen Seite von wenigstens einer der Elektroden einzuspeisen, die der Seite dieser Elektrode entgegengesetzt ist, die dem Metall oder der Metalllegierung zugewandt ist.

3. Laservorrichtung nach einem der Ansprüche 1 oder 2 mit außerdem einem internen Rohr (4), in dessen Innern sich das Reaktionsmetall oder die Reaktionsmetalllegierung (6) befindet, angeordnet zwischen den Elektroden.

4. Vorrichtung nach einem der Ansprüche 1 bis 3, wobei das Reaktionsmetall oder die Reaktionsmetalllegierung (6) vor dem Loch oder den Löchern (60, 62, ..., 72) oder vor der (oder den) porösen Stelle(n) angeordnet ist.

5. Vorrichtung nach einem der Ansprüche 1 bis 4, wobei außerdem Einrichtungen (52) vorgesehen sind, um Gas aus dem Innern des Rohrs zu entnehmen, zwischen den beiden Elektroden.

6. Vorrichtung nach Anspruch 5, wobei die Gasentnahmeeinrichtungen (52) eine längliche bzw. dünne Leitung (74) umfassen, die an den Stellen, wo das Gas entnommen werden soll, Löcher aufweist oder porös ist.

7. Metalldampflaservorrichtung, umfassend:
- ein dichtes Gehäuse (2),
- Elektroden (12, 14), angeordnet im Innern dieses Gehäuses,
- ein Reaktionsmetall oder eine Reaktionsmetalllegierung (6), angeordnet zwischen den Elektroden,
- ein internes Rohr (76), in dessen Innern das Reaktionsmetall oder die Reaktionsmetalllegierung (6) zwischen zwei Elektroden angeordnet ist, wobei dieses interne Rohr mit Löchern (78, 80, 82) versehen ist, die das Einspeisen eines reaktiven Gases in das interne Rohr ermöglichen.

8. Vorrichtung nach einem der vorangehenden Ansprüche, wobei die Elektroden durch angepasste Muffen (56) aus inerten Materialien geschützt sind.

## Claims

1. Metallic vapour laser device comprising:
- a sealed enclosure (2),
- electrodes (12, 14) placed inside this enclosure,
- a reactant metal or metal alloy (6) placed between the electrodes,
- an elongated pipe (40, 58) through which a reactive gas is inserted between the two electrodes, this elongated pipe (40, 58) being perforated with one or several holes (60, 62, ..., 72), or being porous at one or several points.

2. Metal vapour laser device according to claim 1, means (38, 54) being provided for introducing an inert gas in the enclosure on the same side as at least one of the electrodes, opposite the side of the electrode facing the metal or metal alloy.

3. Laser device according to one of claims 1 or 2, also comprising an internal tube (4) inside which the reactant metal or metal alloy (6) is located between the two electrodes.

4. Device according to any one of the claims 1 to 3, the reactant metal or metal alloy (6) being located in front of the hole(s) or in front of the porous point(s).

5. Device according to any one of the claims 1 to 4, means (52) also being provided to extract gas from inside the tube between the two electrodes.

6. Device according to claim 5, gas extraction means including an elongated pipe (74) fitted with holes or being porous at locations at which the gas must be extracted.

7. Metal vapour laser device comprising:
- a sealed enclosure (2),
- electrodes (12, 14) located inside this enclosure,
- a reactant metal or metal alloy (6) located between the electrodes,
- an internal tube (76) inside which the reactant metal or metal alloy (6) is located, placed between the electrodes, the internal tube being perforated with holes (78, 80, 82) permitting the introduction of a reactive gas into the internal tube.

8. Device according to any one of the preceding claims, the electrodes being protected by adjusted sleeves (56) made of inert materials.
